# EUROPEAN PATENT SPECIFICATION

(11) **EP 2 687 556 B1**
(45) Date of publication and mention of the grant of the patent: **11.07.2018**
(21) Application number: 12758348.2
(22) Date of filing: 13.03.2012
(51) Int. Cl.: C08J 5/00, B32B 25/08, B32B 27/00, B32B 27/28, C08L 23/00, C08L 31/04, C08L 83/04, C08L 23/08

(54) **SURFACE MATERIAL AND MULTILAYER BODY USING SAME**
OBERFLÄCHENMATERIAL UND MEHRSCHICHTIGER KÖRPER DAMIT
MATIÈRE DE SURFACE ET CORPS MULTI-COUCHES L'UTILISANT

(30) Priority: 14.03.2011 JP 2011055473
(43) Date of publication of application: 22.01.2014
(73) Proprietor: Shin-Etsu Polymer Co. Ltd., Tokyo 101-0041 (JP)
(72) Inventor: HONDA Masayuki, Saitama-shi, Saitama 331-0811 (JP)
(74) Representative: Osha Liang
(86) International application number: PCT/JP2012/056450
(87) International publication number: WO 2012/124702

(56) References cited:
- WO-A1-2005/066263
- WO-A1-2007/047133
- JP-A- 8 231 783
- JP-A- 9 176 408
- JP-A- 11 124 440
- JP-A- 2001 288 312
- JP-A- 2007 136 685
- US-A1- 2002 032 258

## Description

### Technical Field

The present invention relates to a surface material and a multilayer body using the same.

### Background Art

Examples of a method for imparting functions such as slidability, adhesion prevention, and a gloss improvement to a molded product obtained by molding a resin include a method for blending a bleeding substance in a resin. In the molded product molded using the resin in which the bleeding substance is blended, a minute amount of bleeding substance bleeds slowly on the surface of the molded product, and thereby a desired function is exhibited. For example, silicone oil immiscible with many polymer materials is widely used as the bleeding substance when aiming at slidability, adhesion prevention, and a gloss improvement (for example, Patent Literature 1).

In the resin molded product in which the bleeding substance is blended, in many cases, an outermost layer (surface layer) portion for which functions such as slidability are required is formed of a resin composition in which a bleeding substance is blended, and an inner layer portion is formed of a resin composition other than this, thereby providing a multilayer structure. A liquid substance such as process oil may be blended in the resin composition constituting the inner layer portion for reducing the material cost and imparting plasticity or the like. However, when the inner layer contains the liquid substance such as process oil, a phenomenon (referred to as bleeding or exudation) in which the bleeding substance contained in the outermost layer excessively leaks out onto the surface occurs; a problem in which the adhesion or adsorption of the bleeding substance to a body to be contacted takes place, resulting in the impairment of the functions such as slidability, as well as the impairment of the appearance of the molded product.

For example, a method for making a surface layer containing a liquid substance such as process oil is known as a method for suppressing the bleeding of the bleeding substance (Patent Literature 2).

### Citation List

### Patent Literature

Patent Literature 1: Japanese Patent Application Laid-Open No. 8-120134
Patent Literature 2: Japanese Patent Application No. 2005-329326

### Summary of Invention

### Problems to be Solved by the Invention

The use of the molded product obtained by molding the resin for application to a static seal for a motor vehicle, application to a dynamic seal for a motor vehicle, and application to an interior material for a motor vehicle, or the like is discussed. In these applications, from the viewpoint of enhancing the flexibility and followability of the molded product to improve sealability and from the viewpoint of improving a touch of a part touched by hands or feet, a molded product having plasticity is required.

A method for increasing a process oil content in a resin in order to enhance the plasticity of the molded product is known. A molded product having a Shore A hardness of 60 to 20 and a process oil content of 20 to 70% by mass in a resin, for example, in the case of a dynamic seal for a motor vehicle, and a molded product having a Shore A hardness of 85 to 60 and a process oil content of 5 to 50% by mass in a resin, for example, in the case of a static seal for a motor vehicle are frequently used.

Thus, when using one having the increased process oil content for a multilayer body, the bleeding of the bleeding substance contained in the surface layer is increased. Heretofore, a method for effectively suppressing the bleeding has not existed.

Then, it is an object of the present invention to provide a surface material capable of sufficiently suppressing the bleeding of silicone. It is another object of the present invention to provide a multilayer body including the surface material in an outermost layer and having high plasticity.

### Means for Solving the Problems

The present invention provides a surface material comprising, in a matrix composed of an olefin-based polymer, a domain composed of a cross-linked ethylene vinyl acetate copolymer or a non-cross-linked ethylene vinyl acetate copolymer, and a silicone compound. The surface material of the present invention includes the above structure, and thereby the bleeding of the silicone compound is sufficiently suppressed. Therefore, it is possible to effectively exhibit functions such as slidability, adhesion prevention, and a gloss improvement due to the silicone compound.

Further, the non-cross-linked ethylene vinyl acetate copolymer is a copolymer of 60 to 90% by mass of vinyl acetate and 10 to 40% by mass of ethylene. The raw material ratio of vinyl acetate and ethylene is within this range, and thereby moldability is also better.

The domain is preferably composed of the cross-linked ethylene vinyl acetate copolymer. Thereby, the above surface material sufficiently suppresses the bleeding of the silicone compound, has better moldability, and can provide a molded product having better appearance. Mechanical characteristics such as heat resistance, weatherability, and cold resistance are also better.

The cross-linked ethylene vinyl acetate copolymer is a cross-linked copolymer of 30 to 90% by mass of vinyl acetate and 10 to 70% by mass of ethylene. Thereby, the bleeding suppressing effect of the silicone compound is further increased.

The content of the silicone compound is 1 to 25 parts by mass based on the total 100 parts by mass of the content of the domain and the content of olefin-based polymer.

The content of the domain 20 can is set to 30 to 90% by mass based on the total amount of the surface material.

The olefin-based polymer is preferably a propylene-based polymer. The propylene-based polymer provides a surface material having better molding processability.

The surface material preferably has a Shore A hardness of 90 or less. The Shore A hardness within the range makes it possible to obtain a molded product having higher plasticity.

The present invention provides a multilayer body comprising: at least a base material layer comprising an elastomer and mineral oil; and a surface layer being adjacent to the base material layer and positioned at the outermost layer, wherein the surface layer is composed of the surface material. Because the multilayer body of the present invention has the surface material in the surface layer, it is possible to sufficiently suppress the bleeding of the silicone compound from the surface layer even when the mineral oil content of the base material layer is high. Thereby, it is possible to provide a multilayer body having high plasticity and an excellent touch feeling, and capable of effectively exhibiting functions such as slidability, adhesion prevention, and a gloss improvement due to the silicone compound.

The content of the mineral oil is preferably 20% by mass or more based on the total amount of the base material layer. Thereby, the plasticity of the multilayer body is further increased.

The elastomer may be an olefin-based thermoplastic elastomer, a styrene-based thermoplastic elastomer, or an ethylene-α-olefin-non-conjugated diene copolymer vulcanized rubber.

The Shore A hardness of the base material layer is preferably 85 or less. The Shore A hardness within the range makes it possible to obtain a molded product having higher plasticity.

The multilayer body is suitable as a sliding member, an interior member, and a sealing member.

### Effects of Invention

According to the present invention, a surface material capable of sufficiently suppressing the bleeding of silicone is provided. According to the present invention, it is also possible to provide a multilayer body in which the bleeding of the silicone on the surface of a surface is sufficiently suppressed and which has high plasticity.

Because the bleeding of the silicone on the surface of the surface is sufficiently suppressed in the multilayer body of the present invention, the reduction in the slidability caused by a rash of silicone leakage is suppressed, and thereby it is possible to suitably use the multilayer body also as the sliding member. Because the multilayer body has excellent abrasion resistance, it is possible to suitably use the multilayer body also as the sealing member. Because the surface of the surface has no sticky feeling, and has high plasticity, the surface of the surface has an excellent touch feeling, and it is possible to suitably use the multilayer body also as the interior member.

### Brief Description of Drawings

[Figure 1] Figure 1 is a perspective view of a surface material according to an embodiment.
[Figure 2] Figure 2 is a II-II cross sectional view in Figure 1.
[Figure 3] Figure 3 is a sectional view of a multilayer body according to an embodiment.
[Figure 4] Figure 4 is a schematic sectional view of a sliding testing machine.
[Figure 5] Figure 5 is a graph plotting the relation between a sliding resistance coefficient and the number of slidings.
[Figure 6] Figure 6 is a graph plotting the relation between a sliding resistance coefficient and the number of slidings.
[Figure 7] Figure 7 is an X-ray image of a surface in a direction parallel to a co-extrusion molding direction of Example 1.
[Figure 8] Figure 8 is an X-ray image of a surface in a direction perpendicular to a co-extrusion molding direction of Example 1.
[Figure 9] Figure 9 is an X-ray image of a surface in a direction parallel to a co-extrusion molding direction of Example 6.
[Figure 10] Figure 10 is an X-ray image of a surface in a direction perpendicular to a co-extrusion molding direction of Example 6.
[Figure 11] Figure 11 is an X-ray image of a surface in a direction parallel to a co-extrusion molding direction of Comparative Example 1.
[Figure 12] Figure 12 is an X-ray image of a surface in a direction perpendicular to a co-extrusion molding direction of Comparative Example 1.
[Figure 13] Figure 13 is a graph showing a dispersion state of a silicone compound.

### Embodiments for Carrying Out the Invention

Preferred embodiments of the present invention will be described below in detail referring to the drawings. However, the present invention is not limited to the following embodiments. For the description of drawings, the same reference symbol is given to the same element, with omitting the repetition of the same description.

### [Surface Material]

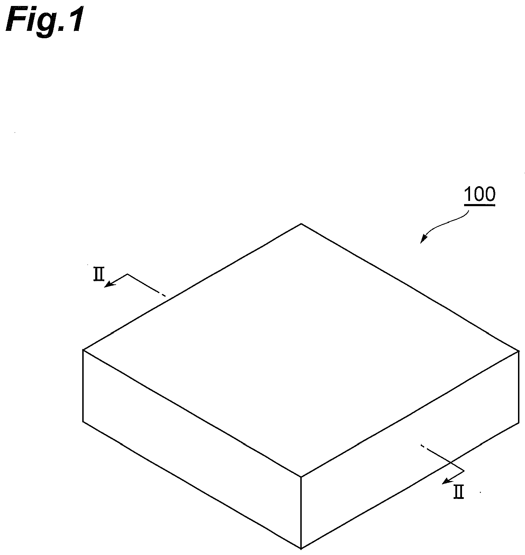

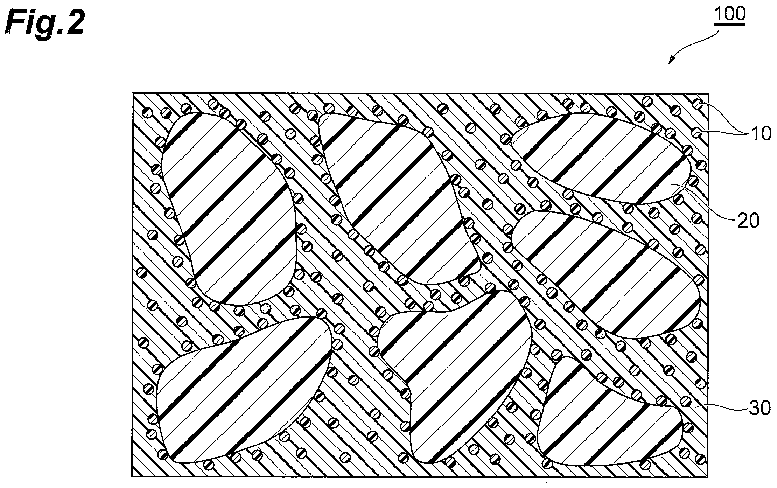

Figure 1 is a perspective view of a surface material 100 according to the present embodiment. Figure 2 is a II-II cross sectional view in Figure 1.

As shown in Figure 2, in the surface material 100, a domain 20 and a silicone compound 10 are dispersed in a matrix 30. The silicone compound 10 exists in a large amount at interface between the matrix 30 and the domain 20.

The domain 20 is composed of a cross-linked ethylene vinyl acetate copolymer (hereinafter, referred to as an "ethylene vinyl acetate cross-linked body" or merely referred to as a "cross-linked body"), or a non-cross-linked ethylene vinyl acetate copolymer. The domain 20 may be composed of one of them alone, and may be composed of a mixture of two or more of them.

The cross-linked ethylene vinyl acetate copolymer is obtained by cross-linking an ethylene vinyl acetate copolymer. It is possible to use a method for cross-linking an ethylene vinyl acetate copolymer using organic peroxide and electron beam, and a hydrosilylation cross-linking method using organo-hydrogen polysiloxane as a method for cross-linking the ethylene vinyl acetate copolymer without limitation. Of these, the cross-linking method using organic peroxide or the cross-linking method using the organic peroxide and the hydrosilylation together is preferable. Thereby, because a high cross-linking efficiency is easily obtained, and it is easy to control a cross-linking reaction and the size of the cross-linked body, it is possible to further suppress the bleeding of the silicone compound. The cross-linking degree of the cross-linked body and the size of the cross-linked body can be adjusted also by the content of a vinyl acetate unit in the ethylene vinyl acetate copolymer. The higher content of vinyl acetate increases the cross-linking reactivity, and facilitates controlling the size of the cross-linked body to a larger size.

The ethylene vinyl acetate copolymer (hereinafter, abbreviated to "EVA" in some cases) is a copolymer of vinyl acetate and ethylene, and is a polymer having a saturated methylene skeleton as a main chain and an acetyloxy group derived from vinyl acetate as a pendant group.

When using the cross-linked body for the domain 20, the ethylene vinyl acetate copolymer is a copolymer of 30 to 90% by mass of vinyl acetate and 10 to 70% by mass of ethylene, preferably a copolymer of 40 to 90% by mass of vinyl acetate and 10 to 60% by mass of ethylene, and more preferably a copolymer of 40 to 80% by mass of vinyl acetate and 20 to 60% by mass of ethylene. The raw material ratio of vinyl acetate and ethylene is within the range, and thereby an effect of suppressing the bleeding of the silicone compound is further exhibited. Mechanical characteristics such as heat resistance, weatherability, and cold resistance are also better.

When using the non-cross-linked ethylene vinyl acetate copolymer for the domain 20, the ethylene vinyl acetate copolymer is a copolymer of 60 to 90% by mass of vinyl acetate and 10 to 40% by mass of ethylene. The raw material ratio of vinyl acetate and ethylene is within the range, and thereby while the effect of suppressing the bleeding of the silicone compound is exhibited, moldability is excellent. On the other hand, when the content of vinyl acetate (monomer) is less than 60% by mass, a depression easily occurs on the extrusion surface of a molded product, and the exclusion (not bleeding but exclusion during molding) of the silicone compound tends to be apt to be observed in the depressed portion. Because an adhesive force is strong, adhesion to a screw or the like of an extruder occurs easily; an amount to be discharged is apt to be unstable; and the moldability tends to be problematic.

Although the ethylene vinyl acetate copolymer may be a block copolymer or a random copolymer, the ethylene vinyl acetate copolymer is preferably the random copolymer. The ethylene vinyl acetate copolymer may be obtained by preliminarily cross-linking a polymer with γ ray or electron beam. The ethylene vinyl acetate
copolymer preferably has a Mooney viscosity of 3 to 60, and more preferably 15 to 50. In this specification, the Mooney viscosity of the ethylene vinyl acetate copolymer is obtained from a torque applied to a disc rotated twice per minute in an ethylene vinyl acetate copolymer sample heated to 100°C, and is a value after a lapse of 4 minutes from the start of rotation after preliminary heating for 1 minute.

The weight average molecular weight of the ethylene vinyl acetate copolymer is preferably 5,000 to 1,000,000, and more preferably 10,000 to 600,000. In this specification, the weight average molecular weight is a standard polystyrene equivalent obtained by measurement according to gel permeation chromatography (GPC).

The matrix 30 is composed of an olefin-based polymer. The olefin-based polymer is a polymer substantially consisting of a monomer unit derived from one or two or more olefin monomers. As the olefin-based polymer, it is preferable to use the one having a poor reactivity with a cross-linking agent used for cross-linking the ethylene vinyl acetate copolymer.

Examples of the olefin-based polymer include at least one hydrocarbon-based polymer prepared by polymerizing α-olefin, cyclo-olefin, conjugated diene, or non-conjugated diene. A copolymer of a monomer selected from the group consisting of α-olefin, cyclo-olefin, conjugated diene, and non-conjugated diene, and a copolymer of a monomer selected from the group with a monomer not belonging to the group (hereinafter, referred to as a "non-olefin-based monomer" in some cases) may be used as the olefin-based polymer. Herein, examples of the non-olefin-based monomer include (meth)acrylic acid, (meth)acrylic acid ester, vinyl acetate, vinyl alcohol (such as the one introduced as a saponified material of vinyl acetate), unsaturated carboxylic acid (containing α,β-unsaturated carboxylic acid), vinyl ester, and styrene. It is possible to use the above-described olefin-based polymers singly or in combinations of two or more of them.

The olefin-based polymer is preferably a propylene-based polymer because the plasticity of the surface material 100 is better and the propylene-based polymer is less reactive with the cross-linking agent used for cross-linking the ethylene vinyl acetate copolymer. Adhesion with an olefin-based base material layer is advantageously improved when forming a multilayer body by using the propylene-based polymer as the olefin-based polymer.

Herein, the propylene-based polymer is preferably a propylene homopolymer, or a block copolymer or random copolymer of propylene and α-olefin having 2 to 20 hydrocarbons. The propylene-based polymer preferably contains a unit derived from propylene in the amount of 50 % by mole or more. Specific examples include polypropylene, a propylene-ethylene random copolymer, a propylene-ethylene block copolymer, a propylene-ethylene-1-butene random copolymer, and reactor TPO. The crystal structure may be an isotactic crystal structure, a syndiotactic crystal structure, or a mixture thereof. Furthermore, the propylene-based polymer may be an amorphous or low crystal propylene-α-olefin random copolymer, and a two-stage polymerization polymer of a crystalline propylene polymer and an amorphous or low crystal propylene-α-olefin random copolymer.

The melt flow rate (ASTM D 1238-65T, 230°C, 2.16 kg load) of the propylene-based polymer is preferably 0.01 to 100 g/10 minutes, and more preferably 0.05 to 80 g/10 minutes.

The silicone compound 10 may be silicone oil or silicone gum (rubber), and a silicone-based copolymer. Particularly, from the viewpoint of effectively exhibiting slidability and a good finger touch, a silicone compound having a property of not a solid but a liquid (which may be viscous) when shearing is applied at -30 to 80°C is preferable.

Examples of silicone oil or silicone gum (rubber) include dimethyl silicone; methylphenyl silicone; those silicones having 5% by mole or less of a vinyl group; hydrogen polysiloxane; modified silicone oil such as alkyl-modified one, polyether-modified one, higher fatty acid amide-modified one, higher fatty acid ester-modified one, or fluorine-modified one (fluorosilicone); and a silicone reaction product condensed in a thermoplastic resin (a condensate of organosiloxane having a silanol group and organosiloxane having an amino group or an amide group). Particularly, linear dimethyl polysiloxane containing less than 1% by mole of a vinyl group and having a number average molecular weight from 10 to 6 × 10⁶ (dimethyl silicone oil and gum or rubber), linear methylhydrogen polysiloxane, and methylhydrogen polysiloxane having an alkylene group are preferable because those are excellent in sustainability of sliding performance and weatherability. In this specification, the number average molecular weight is a standard polystyrene equivalent obtained by measurement according to gel permeation chromatography (GPC).

On the other hand, the above silicone-based copolymer is prepared by copolymerizing various silicone compounds described above in the section of silicone oil or silicone gum (rubber) with other resin. As the silicone-based copolymer, it is possible to use a commercially available copolymer or to produce a reaction product. Specific examples of the silicone-based copolymer include a silicone-acrylic copolymer "CHALINE" (trade name, manufactured by Nissin Chemical Industry Co., Ltd.), "X-22-8171" (trade name, manufactured by Shin-Etsu Chemical Co., Ltd.), a silicone-olefin copolymer "SILGRAFT" (trade name, manufactured by Nippon Unicar Company Limited), "SILICONE CONCENTRATE" (trade name, manufactured by Dow Coming Toray Co., Ltd.), and a part-cross-linked product of dimethyl-vinyl polysiloxane containing 0 to 1% by mole of a vinyl group with EPDM containing 0 to 5% by weight of an unsaturated group, a styrene butadiene styrene block copolymer (SBS), and a styrene isoprene styrene block copolymer (SIS).

The surface material 100 can contain various additive components besides the domain 20, the olefin-based polymer, and the silicone compound 10 which are the essential components. Examples of the additive components include a reinforcement agent such as a pigment, silica, or carbon black; an antioxidant; a weatherability improving agent; a thermoplastic resin; an elastomer; a mildew proofing agent; an antibacterial agent; a fire retardant; a softener such as paraffin-based one; a sliding agent; and a lubricant such as fluorine-based one.

The content of the domain 20 is set to 30 to 90% by mass based on the total amount of the surface material 100, preferably 40 to 80% by mass, and more preferably 55 to 70% by mass.

The content of the olefin-based polymer can be set to 5 to 40% by mass based on the total amount of the surface material 100, preferably 10 to 35% by mass, and more preferably 15 to 30% by mass.

The content of the silicone compound 10 is set to 1 to 25 parts by mass (phr) based on the total 100 parts by mass of the content of the domain 20 and the content of the olefin-based polymer. When a hardness is low as in the surface material of the present invention, the role of the silicone compound in the sliding performance is high, and particularly, the silicone compound prevents noise and further improves abrasion resistance (Crock meter test). The silicone compound of 5 parts by mass (phr) or more is preferably contained.

The surface material 100 preferably has a comparatively low hardness, i.e., a Shore A hardness of 90 or less, more preferably 88 or less, and still more preferably 85 or less. For example, the Shore A hardness of the surface material 100 can be set to 40 to 90. In this specification, the Shore A hardness means a value measured based on durometer A type of JIS K6253.

The Shore A hardness of the surface material 100 can be adjusted by suitably adjusting the kind of the olefin-based polymer, and the contents of the olefin-based polymer and the domain 20. The Shore A hardness can be adjusted by adding a cross-linked or non-cross-linked low-hardness rubber (elastomer) other than the ethylene vinyl acetate copolymer to the surface material 100. The cross-linked or non-cross-linked low-hardness rubber (elastomer) other
than the ethylene vinyl acetate copolymer is a cross-linked or non-cross-linked low-hardness polymer in which a Shore A (10 seconds later) hardness is 90 or less. Examples of the cross-linked or non-cross-linked low-hardness rubber other than the ethylene vinyl acetate copolymer include an ethylene-α-olefin-non-conjugated diene copolymer, an ethylene-α-olefin copolymer, a copolymer composed of a vinyl aromatic hydrocarbon and a conjugated diene, a hydrogenated product of a copolymer composed of a vinyl aromatic hydrocarbon and a conjugated diene, and acid anhydride modified products of these copolymers. The other examples thereof include an acrylic rubber.

Commercial items in which the α-olefin is propylene, 1-butene, 4-methyl pentene, 1-hexene, and 1-octene, and the non-conjugated diene is 5-ethylidene-2-norbornene and 5-vinyl-2-norbornene can be suitably used as the ethylene-α-olefin-non-conjugated diene copolymer. Commercial items in which the conjugated diene is 1,3-butadiene, isoprene, and 1,3-pentadiene, and the aromatic vinyl monomer is styrene and α-methylstyrene can be suitably used as the copolymer composed of a vinyl aromatic hydrocarbon and a conjugated diene and the hydrogenated product thereof. Examples of the acrylic rubber include an ethyl acrylate rubber, an ethylene-ethylene-vinyl acetate copolymer-ethyl acrylate, and an acrylic rubber in which cross-linking sites such as monochloroacetic acid and epoxy are copolymerized. The cross-linked or non-cross-linked low-hardness rubber other than the ethylene vinyl acetate copolymer can be added at the ratio of 45% by mass or less to the surface material of the present invention.

### [Method for Manufacturing Surface Material]

The cross-linked ethylene vinyl acetate copolymer can be obtained by subjecting the ethylene vinyl acetate copolymer to a treatment with electron beam/ultraviolet ray irradiation, heating or shearing or the like using a cross-linking agent such as organic peroxide, a hydrosilylation agent (and a hydrosilylation catalyst), a condensation agent (amine, carbodiimide, hydroxyl), or aziridine.

Preferred organic peroxide includes peroxy ketal, dialkyl peroxide, peroxy ester, diacyl peroxide, and peroxy dicarbonate. Specific examples thereof include 1,1-di(t-hexylperoxy)cyclohexane, 1,1-di(t-hexylperoxy)3,3,5-trimethylcyclohexane, 1,1-di(t-butylperoxy)cyclohexane, n-butyl-4,4-di(t-butylperoxy)valerate, dicumylperoxide, 2,5-dimethyl-2,5-di(t-butylperoxy)hexane, di(2-t-butylperoxyisopropyl)benzene, t-butylcumylperoxide, di-t-hexylperoxide, di-t-butylperoxide, 2,5-dimethyl-2,5-di(t-butylperoxy)hexane-3,2,5-dimethyl-2,5-di(benzoy lperoxy)hexane, t-hexylperoxybenzoate, t-butylperoxy-3 -methylbenzoate, diisopropylperoxydicarbonate, di(4-t-butylcyclohexyl)peroxydicarbonate, and 1,6-bis(t-butylperoxycarbonyloxy)hexane.

Examples of the hydrosilylation agent include organo-hydrogen polysiloxane having 2 to 200 hydrosilyl groups (SiH group) in one molecule. Examples thereof include a hydrogenated silicon compound such as methylhydrogen polysiloxane or methylhydrogen alkylmethyl polysiloxane. Examples of the hydrosilylation catalyst include a platinum-based catalyst, a palladium-based catalyst, and a rhodium-based catalyst. Examples thereof include hexachloro platinic acid, platinum chloride, platinum oxide, a platinum complex, and complexes of the complexes thereof and hydrocarbons such as olefin, alcohol, or vinyl group-containing organopolysiloxane. The organic peroxide can also be used as the hydrosilylation catalyst because the organo peroxide activates the hydrosilylation agent.

For the cross-linking reaction, it is preferable to simultaneously perform kneading to apply shearing, and cross-linking under the presence of the olefin-based polymer, the ethylene vinyl acetate copolymer, and the cross-linking agent (dynamic cross-linking). It is possible to obtain a structure in which the domain 20 composed of the cross-linked ethylene vinyl acetate copolymer is more uniformly dispersed in the matrix 30 composed of the olefin-based polymer by the dynamic cross-linking. The heat resistance, mechanical properties, and weatherability of the surface material are further improved by using the structure obtained by the dynamic cross-linking.

Herein, the size of the domain 20 composed of the cross-linked ethylene vinyl acetate copolymer can be adjusted by the amounts of the ethylene vinyl acetate copolymer and the cross-linking agent to be added. Although the amount to be added may be suitably determined according to the kinds of the ethylene vinyl acetate copolymer and the cross-linking agent used for the cross-linking reaction, it is possible to set the amount of the organic peroxide to 0.01 to 10 parts by mass based on 100 parts by mass of the ethylene vinyl acetate copolymer, for example, when using the organic peroxide as the cross-linking agent.

The cross-linking reaction can be performed by kneading the olefin-based polymer, the ethylene vinyl acetate copolymer, and the cross-linking agent using a kneading machine such as an extruder (twin screw extruder or single screw extruder) or a kneader. In this case, because the structure in which the cross-linked ethylene vinyl acetate copolymer is more uniformly dispersed in the olefin-based polymer is obtained, it is preferable to mix the olefin-based polymer and the ethylene vinyl acetate copolymer first, and then add the cross-linking agent from a side feeder or a liquid injecting machine to perform the dynamic cross-linking.

Although a temperature, a kneading speed, and an extrusion speed or the like when performing kneading in the kneading machine may be suitably set according to the kinds of raw materials to be used, for example, the cylinder temperature of the twin screw extruder is set to 120 to 180°C; the rotation speed of the screw is set to 150 to 500 rpm; and an amount to be discharged (extrusion speed) is suitably adjusted by the diameter of the screw. Although the extrusion speed is not limited thereto, the extrusion speed can be set to 15 to 25 kg/hour, for example. After the obtained structure is cooled and solidified, for example, the solidified body may be crushed to form lump having a size (shorter side of 5 mm or less) close to that of a pellet, or powder, and may be cut by using a pelletizer.

Then, the surface material can be obtained by kneading the above structure obtained by the cross-linking reaction and the silicone compound 10. In this case, when adding the above-described various additives, it is preferable to knead the various additives together at this stage. Examples of the kneading method include a method of performing kneading using the kneading machine such as the same extruder (twin screw extruder or single screw extruder) or kneader as that in the cross-linking reaction.

When using the non-cross-linked ethylene vinyl acetate copolymer as the domain 20, the surface material can be obtained, for example, by kneading the olefin-based polymer, the non-cross-linked ethylene vinyl acetate copolymer, and the silicone compound 10.

When using the mixture of the non-cross-linked ethylene vinyl acetate copolymer and the cross-linked ethylene vinyl acetate copolymer as the domain 20, the surface material can be obtained by kneading the above structure obtained by the cross-linking reaction, the non-cross-linked ethylene vinyl acetate copolymer, and the silicone compound 10, for example.

### [Multilayer Body]

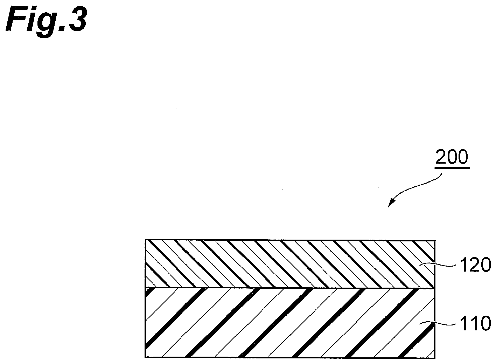

Figure 3 is a sectional view of a multilayer body 200 according to the present embodiment. Particularly, the multilayer body 200 of Figure 3 shows a case of a two-layered body, and includes a surface layer 120 formed of the surface material 100 on a base material layer 110. The multilayer body 200 may be molded so that the surface layer 120 is positioned at the outermost layer. For example, the base material layer 110 may include a plurality of layers, and the multilayer body 200 may contain an optional layer (for example, a resin layer and the surface layer 120 or the like) on the opposite side of the surface layer 120 of the base material layer 110.

The base material layer 110 contains mineral oil and an elastomer. The elastomer contained in the base material layer 110 may be composed of raw materials to be generally used, i.e., various thermoplastic elastomers such as a polyolefin-based thermoplastic elastomer (TPO, TPV-O) in which EP, EPDM, or a cross-linked body thereof is dispersed in an olefin-based polymer, and a styrene-based thermoplastic elastomer (TPS, TPV-S) in which a styrene-based elastomer such as SEP, SEBS, SEPS, or SEEPS in an olefin-based polymer is non-cross-linked or cross-linked, and dispersed. The elastomer may be a thermosetting elastomer. Examples of the thermosetting elastomer include EPDM, a mixed material of EPDM and a styrene butadiene rubber (SBR), and a mixed material of EPDM and an isoprene rubber (IR).

Specific examples include an olefin-based thermoplastic elastomer, a styrene-based thermoplastic elastomer, and an ethylene-α-olefin-non-conjugated diene copolymer vulcanized rubber represented by EPDM. These thermoplastic elastomers and the vulcanized rubber are molded to the base material layer 110 in a solid (without foaming) or by foaming.

In order to form the base material layer 110 of a low hardness elastomer, it is preferable to increase the content of the mineral oil. Specifically, it is preferable to set the content of the mineral oil to 20% by mass or more based on the total amount of the base material layer 110, more preferably 30% by mass or more, still more preferably 40% by mass or more, and particularly preferably 50% by mass or more. Although the upper limit of the mineral oil content is not particularly limited as long as the shape of the base material layer 110 can be maintained, the upper limit can be set to 85% by mass or less, for example.

The Shore A hardness of the base material layer 110 is preferably 85 or less, more preferably 75 or less, and still more preferably 65 or less. As the Shore A hardness is lower, the elastomer is a lower hardness elastomer, which can increase the plasticity of the multilayer body 200. The Shore A hardness may be 45 or less depending on the application, and the base material layer 110 may be as soft as being not measurable by an automatic hardness scale. Being as soft as being not measurable means generating noise or vibration that makes a situation where the measurement has to be stopped.

As the mineral oil contained in the base material layer 110, one used as rubber blending oil blended in order to easily soften and process a rubber material such as extender oil or process oil is preferable, and the process oil is more preferable. Examples of the rubber blending oil include paraffin-based mineral oil, naphthene-based mineral oil, aromatic-based mineral oil, or mixed oil of two or more of them. Examples of the process oil include Diana Process oil PW (trade name, Idemitsu Kosan Co., Ltd.), PW90, PW380, Fucol Process Oil P (trade name, Fuji Kosan Co., Ltd.), Lucant (trade name, Mitsui Chemicals, Inc.), and Moresco White (trade name, MORESCO Corporation, liquid paraffin).

Because the surface layer 120 is formed of the above-described surface material 100, the surface layer 120 can sufficiently suppress the bleeding of the silicone compound 10 from the surface layer 120 even if the mineral oil content of the base material layer 110 is high. Therefore, the multilayer body 200 has high plasticity and an excellent touch feeling, and can effectively exhibit functions such as slidability, adhesion prevention, and a gloss improvement due to the silicone compound. Thereby, for example, because followability is high when the multilayer body 200 is used as a sealing member, sealability is remarkably improved, and when the multilayer body 200 is used as an interior member, and the multilayer body 200 is touched by hands or feet, a touch (touch feeling) is extremely excellent without being sticky. Because the bleeding of the silicone compound is suppressed, the slidability of the multilayer body 200 is also excellent, and for example, the multilayer body 200 is suitably used also as a sliding member.

The present inventors infer the mechanism in which the multilayer body of the present invention exhibits the above-described effects as follows. It is considered that the mineral oil is moved into the surface layer from the base material layer, and thereby the silicone compound is pushed out to the surface of the multilayer body to cause the bleeding of the silicone compound. It is considered that because the surface layer of the multilayer body of the present invention contains the cross-linked ethylene vinyl acetate copolymer with small mineral oil absorbability (high oil resistance) or the non-cross-linked ethylene vinyl acetate copolymer in a high content to block the movement of the mineral oil from the base material layer to the surface layer, the bleeding of the silicone compound is suppressed. It is considered that the surface layer of the present invention serves as a barrier of the mineral oil besides preventing the bleeding of the silicone compound contained in the surface material. A phenomenon supports this inference, in which phenomenon the mineral oil does not bleed out on the surface if even a base material composition in which the amount of the mineral oil contained in the base material layer is so large that the mineral oil bleeds when the base material layer is alone is coated with the surface material of the present invention. Furthermore, it is considered that the domain in the surface material of the present invention prevents the penetration of not only the mineral oil but also the silicone compound into the domain (hardly impregnates or dissolves), and the domain does not become a medium in which the silicone compound migrates. It is considered that the silicone compound hardly penetrates through the crystal portion of the olefin-based polymer; the silicone compound is dispersed and arranged so as to avoid the domain and the crystal of the olefin-based polymer; and the silicone compound cannot move based on a movement phenomenon using an intermediate such as dissolution or diffusion from the space in which the silicone compound is arranged. It is considered that this is supported by the capture of an image in which a contrasting density is higher than that of Si elemental mapping of the cross-linked body of the ethylene-α-olefin-non-conjugated diene copolymer, i.e., an image in which the silicone compound is highly localized if the surface material of the present invention is subjected to Si elemental mapping by X-rays.

### [Method for Manufacturing Multilayer Body]

The multilayer body 200 can be manufactured by subjecting the base material layer 110 and the surface layer 120 to extrusion molding (co-extrusion), injection molding (insert molding), or blow molding (co-extrusion). For example, in the case of the extrusion molding, a kneaded product (pellet or the like) of the above-described surface material 100, and a kneaded product (pellet or the like) of the raw materials contained in the base material layer 110 are prepared; for example, two extruders are connected to a flat belt die to put the kneaded product of the surface material 100 in one extruder and to put the kneaded product of the base material layer 110 in the other; and the kneaded products are extruded, and thereby a flat belt-shaped multilayer body can be manufactured. Although a cylinder temperature of the extruder, a temperature of the die, and an extrusion speed or the like can be suitably set according to the kind of the raw material and the shape of the molded product or the like, for example, the cylinder temperature of 140 to 220°C, the die temperature of 170 to 220°C, and the extrusion speed of 0.1 to 50 kg/hour can be set. When forming the base material layer of the ethylene-α-olefin-non-conjugated diene copolymer vulcanized rubber, molding is performed at the cylinder temperature of 70 to 140°C and the die temperature of 100 to 220°C or the like.

### [Sealing Member, Inner Layer Member, Sliding Member]

Because the multilayer body of the present invention has high plasticity, and has an excellent touch feeling, slidability, adhesion prevention, gloss improvement, and heat resistance, the multilayer body can be suitably used for the sealing member, the interior member, and the sliding member or the like. Examples thereof include sealing members such as a dynamic seal for a motor vehicle and a static seal for a motor vehicle, interior members such as an interior material for a motor vehicle, and sliding members such as a two-layered mat and a two-layered tube.

Examples of the dynamic seal for a motor vehicle include a door seal, a trunk lid, a hood seal, a window cleaner, a sill seal, a split fender, a split line seal, and a secondary seal.

Examples of the static seal for a motor vehicle include a weather strip, a glass run, and a drainage mall.

Examples of the interior material for a motor vehicle include an instrument panel, a console box, a steering cover, a shift lever knob, a brake pad, an accelerator pad, a foot brake cover, and a hand brake cover.

Because the multilayer body has excellent slidability, the multilayer body is suitably used also for the two-layered mat and the two-layered tube, for example.

### Examples

Hereinafter, the present invention will be described more specifically based on Examples. However, the present invention is not limited to the following Examples.

### [Materials]

Materials shown in Table 1 were used for the following Examples, Comparative Examples, and Reference Examples.

**[Table 1]**

| Table 1. | Brevity code | Manufacturer, "trade name" | Remarks |
|---|---|---|---|
| Olefin-based polymer | J-466HP | Prime Polymer Co., Ltd., "Prime PP (grade J466HP)" | - |
| | H700 | Prime Polymer Co., Ltd., "Prime Polypro H700" | Polypropylene |
| | MA3H | Japan Polypropylene Corporation, "Novatec PP (grade MA3H)" | - |
| | EV203GV | Prime Polymer Co., Ltd, "Prime Polypro E-203GV" | Polypropylene |
| | R110MP | Prime Polymer Co., Ltd., "Prime TPO (flexible block-based R110MP)" | - |
| Ethylene vinyl acetate copolymer | LVP400 | LANXESS, "Levapren(Grade 400)" | Vinyl acetate unit 40% by mass |
| | LVP600 | LANXESS, "Levapren(Grade 600)" | Vinyl acetate unit 60% by mass |
| | LVP800 | LANXESS, "Levapren(Grade 800)" | Vinyl acetate unit 80% by mass |
| Elastomer | Septon 4055 | Kuraray Co., Ltd., "Septon 4055" | Styrene copolymer |
| | 3072EPM | Mitsui Chemicals, Inc. "MITUIEPT 3072EPM" | Ethylene-propylene terpolymer |
| | 4155N | DSM, "SarlinkX4155N" | Polyolefin-based elastomer |
| | K9720 | Mitsui Chemicals, Inc., "Mitsui Elastomer K9720" | Ethylene-butene terpolymer |
| | 601F | Sumitomo Chemical Co., Ltd., "Esprene EPDM601F" | Ethylene-propylene rubber |
| Silicone compound | X93-1295 | Shin-Etsu Chemical Co., Ltd., "X93-1295" | Organo-hydrogen polysiloxane |
| | X-22-2101 | Shin-Etsu Chemical Co., Ltd., "X-22-2101" | Silicone master pellet |
| | KF-96 | Shin-Etsu Chemical Co., Ltd., "KF-96 1000cs" | Silicone oil |
| Organic peroxide | 25B40 | NOF Corporation, "PERHEXA 25B-40" | - |
| | 25B | NOF Corporation, "PERHEXA 25B" | - |
| Antioxidant | WL | Goodyear, "Wing Stay L" | Phenol-based antioxidant |
| | AO-60 | Adeka Corporation, "Adeka Stab AO-60" | Phenol-based antioxidant |
| | HP-10 | Adeka Corporation, "Adeka Stab HP-10" | Phosphorous-based antioxidant |
| | 1-1010 | BASF, "IRGANOX 1010" | Phenol-based antioxidant |
| Light stabilizer | LA-63P | Adeka Corporation, "Adeka Stab LA-63P" | Light stabilizer |
| | LA-36 | Adeka Corporation, "Adeka Stab LA-36" | Light stabilizer |
| Pigment | F30940MM | DIC Corporation, "PEONY BLACK F-30940MM" | carbon black, black pigment containing 40% by mass |
| Mineral oil | PW-90 | Idemitsu Kosan Co., Ltd., "Diana Process oil PW (grade (90))" | Paraffin-based process oil |
| Other | 200V | Nippon Aerosil Co., Ltd., "AEROJIL200" | Fumed silica |
| | A-DCP | Shin-Nakamura Chemical Co., Ltd., "A-DCP" | Tricyclodecane dimethanol diacrylate |

### [First Kneading]

TPV1 to TPV6 were prepared using a high-speed same direction twin-screw extruder (TEM41SS, Toshiba Machine Co., Ltd.) of φ41. An F1 composition and an F2 composition shown in Table 2 were separately mixed in a blender; the F1 composition was fed to the extruder from a weight feeder attached to the extruder; and the F2 composition was fed from a side feeder. A cylinder of the extruder was set to 120 to 180°C; the rotation number of a screw including several zones including a kneading disc was set to 200 rpm; and a discharge speed was set so that the total amount of the F1 composition and the F2 composition was 20 kg/hour. However, after EVA was crushed and subjected to dusting powder at 200 V (adhesion prevention), TPV5 and TPV6 were put in the blender to obtain the F1 composition. In the F1 composition of TPV2, PW-90 was not mixed in the blender, and was injected into the extruder using a liquid injecting machine. The F1 composition of TPV3 was put in a Banbury mixer in place of the blender and kneaded until a resin temperature was 205°C. The kneaded product was led into a feeder ruder with a strand die (Moriyama Company Ltd.) and pelletized by a pelletizer. The pellet was subjected to dusting powder at 200 V of the amount of the F1 composition.

In the preparation of TPV1, TPV2, and TPV4, the head of the extruder was opened; the discharged kneaded product was received in a water bath; the kneaded product was compulsorily immersed to be cooled; and the cooled lump was crushed. The crushed product passing through a punch hole of φ5 was used for second kneading as TPV1, TPV2, and TPV4. In the preparation of TPV3, the die was attached to the head of the extruder; the extruded strand was cooled in the water bath; and the strand was cut (pelletized). The die was set to 200°C. The pellet of about φ3h3 was used for second kneading as TPV3. In the preparation of TPV5 and TPV6, the head of the extruder was opened; the discharged knubbed and powdered kneaded product was cooled by an oscillating type cooler; the cooled kneaded product was crushed; and the crushed product was used for second kneading. TPV4 was prepared so that the size of a cross-linked ethylene vinyl acetate copolymer was greater than that of TPV1.

In TPV1, the cross-linked ethylene vinyl acetate copolymer with a domain diameter of 1 to 35 µm existed; the domains were fused with each other; an olefin-based polymer covering the domain was fused to another domain; and the covering olefin-based polymers were fused with each other. The domain diameter of TPV2 was 2 to 75 µm, and the domain greater than TPV1 existed.

### [Table 2]

**Table 2.**

| | Material | TPV1 | TPV2 | TPV3 | TPV4 | TPV5 | TPV6 |
|---|---|---|---|---|---|---|---|
| | J466HP | 8.59 | - | - | 4.33 | 4.11 | 4.11 |
| | 200 V dusting powder to crushed product of LVP600 (100:2) | - | - | - | - | 74.02 | - |
| | 200 V dusting powder to crushed product of LVP800 (100:2) | - | - | - | - | - | 74.02 |
| | MA3H | - | 7.08 | 6.81 | - | - | - |
| | R110MP | - | 3.58 | 1.23 | - | - | - |
| F1 | LVP400 | 73.42 | - | - | 77.97 | - | - |
| composition | 3072EPM | - | 60.20 | 20.91 | - | - | - |
| | 4155N | - | - | 29.55 | - | - | - |
| | K9720 | 3.86 | - | - | 4.33 | 4.11 | 4.11 |
| | 601F | - | - | 24.65 | - | - | - |
| | X93-1295 | 0.25 | 2.80 | 0.71 | 0.22 | 3.63 | 3.63 |
| | WL | - | 0.21 | 0.17 | - | - | - |
| | F30940MM | - | - | 3.51 | - | - | - |
| | PW-90 | - | 12.60 | 4.66 | - | - | - |
| | 200V | - | 1.63 | 0.49 | - | - | - |
| | A-DCP | 0.13 | 1.19 | 0.19 | 0.11 | 1.83 | 1.83 |
| F2 composition | H700 | 10.31 | 7.59 | 5.34 | 9.78 | 10.68 | 10.68 |
| | 25B40 | 3.44 | 3.12 | 1.78 | 3.26 | - | - |
| | 25B | - | - | - | - | 1.42 | 1.42 |
| | 200V | - | - | - | - | 0.20 | 0.20 |
| Total | | 100.00 | 100.00 | 100.00 | 100.00 | 100.00 | 100.00 |

### [Second Kneading]

Materials were blended at blending ratios described in Tables 3 to 5, and mixed using the blender. The mixture was fed from the weight feeder and kneaded using the same high-speed same direction twin-screw extruder of φ41 as that of the first kneading. The side feeder was not used. The cylinder temperature of the extruder was set at 150 to 190°C, the temperature of the die at 200°C, the screw rotation speed at 400 rpm, and the kneaded product was discharged at a discharge speed of 40 kg/hour to manufacture pellets (surface materials) of Examples 1 to 9, Comparative Examples 1 to 6, and Reference Examples 1 and 2.

"phr" in Tables 3 to 5 means part by mass based on 100 parts by mass of the total amount of TPV1, TPV2, TPV3, TPV4, TPV5, TPV6, the olefin-based polymer shown in Table 1, the elastomer shown in Table 1, and the mineral oil shown in Table 1.

### [Table 3]

**Table 3.**

| Name of product | Unit | Example 1 | Example 2 | Example 3 | Example 4 | Example 5 | Example 6 | Example 7 | Example 8 |
|---|---|---|---|---|---|---|---|---|---|
| TPV1 | phr | 95.91 | 95.91 | 95.91 | 100.00 | 100.00 | - | - | - |
| TPV2 | phr | - | - | - | - | - | - | - | - |
| TPV3 | phr | - | - | - | - | - | - | - | - |
| TPV4 | phr | - | - | - | - | - | 90.30 | - | - |
| TPV5 | phr | - | - | - | - | - | - | 90.00 | - |
| TPV6 | phr | - | - | - | - | - | - | - | 90.00 |
| J-466HP | phr | 4.09 | 4.09 | 4.09 | - | - | - | - | - |
| EV203GV | phr | - | - | - | - | - | 9.70 | 10.00 | 10.00 |
| Septon 4055 | phr | - | - | - | - | - | - | - | - |
| X-22-2101 | phr | 7.14 | 3.30 | 1.65 | 7.14 | 3.30 | 7.14 | 7.14 | 7.14 |
| KF-96 | phr | 7.43 | 3.45 | 1.73 | 7.43 | 3.45 | 7.43 | 7.43 | 7.43 |
| 1-1010 | phr | - | - | - | - | - | - | 0.20 | 0.20 |
| AO-60 | phr | 0.15 | 0.15 | 0.15 | 0.15 | 0.15 | 0.15 | - | - |
| HP-10 | phr | 0.15 | 0.15 | 0.15 | 0.15 | 0.15 | 0.15 | 0.20 | 0.20 |
| LA-63P | phr | 0.30 | 0.30 | 0.30 | 0.30 | 0.30 | 0.30 | 0.30 | 0.30 |
| LA-36 | phr | 0.30 | 0.30 | 0.30 | 0.30 | 0.30 | 0.30 | 0.30 | 0.30 |
| F30940MM | phr | 0.35 | 0.35 | 0.35 | 0.35 | 0.35 | 5.00 | - | - |
| Total | phr | 115.82 | 108.00 | 104.63 | 115.82 | 108.00 | 120.47 | 115.57 | 115.57 |
| PP content | % by mass | 22.3 | 22.1 | 22.0 | 20.8 | 19.0 | 26.0 | 23.3 | 23.3 |
| Process oil content | % by mass | 0.0 | 0.0 | 0.0 | 0.0 | 0.0 | 0.0 | 0.0 | 0.0 |
| Silicone content | % by mass | 9.5 | 4.7 | 2.4 | 9.5 | 4.7 | 9.1 | 9.5 | 9.5 |
| EVA content | % by mass | 60.8 | 65.2 | 67.3 | 63.4 | 68.0 | 58.4 | 56.5 | 56.5 |
| Other component content | % by mass | 7.4 | 8.0 | 8.3 | 6.3 | 8.3 | 6.5 | 10.7 | 10.7 |

### [Table 4]

**Table 4.**

| Name of product | Unit | Comparative Example 1 | Comparative Example 2 | Comparative Example 3 | Comparative Example 4 | Comparative Example 5 | Comparative Example 6 | Reference Example 1 |
|---|---|---|---|---|---|---|---|---|
| TPV1 | phr | - | - | - | - | | - | - |
| TPV2 | phr | 83.64 | - | - | - | - | - | - |
| TPV3 | phr | - | 100.00 | 100.00 | 100.00 | 70.00 | 70.00 | 70.00 |
| J-466HP | phr | 16.36 | - | - | - | - | - | - |
| Septon 4055 | phr | - | - | - | - | 21.43 | 15.00 | 10.00 |
| PW90 | phr | - | - | - | - | 8.57 | 15.00 | 20.00 |
| X-22-2101 | phr | 7.14 | 7.14 | 3.57 | 1.79 | 7.14 | 7.14 | 7.14 |
| KF-96 | phr | 7.43 | 7.43 | 3.72 | 1.86 | 7.43 | 7.43 | 7.43 |
| AO-60 | phr | 0.15 | 0.15 | 0.15 | 0.15 | 0.15 | 0.15 | 0.15 |
| HP-10 | phr | 0.15 | 0.15 | 0.15 | 0.15 | 0.15 | 0.15 | 0.15 |
| LA-63P | phr | 0.30 | 0.30 | 0.30 | 0.30 | 0.30 | 0.30 | 0.30 |
| LA-36 | phr | 0.30 | 0.30 | 0.30 | 0.30 | 0.30 | 0.30 | 0.30 |
| F30940MM | phr | 0.35 | 0.35 | 0.35 | 0.35 | 0.35 | 0.35 | 0.35 |
| Total | phr | 115.82 | 115.82 | 108.54 | 104.89 | 115.82 | 115.82 | 115.82 |
| PP content | % by mass | 27.8 | 16.5 | 16.0 | 15.7 | 12.5 | 12.5 | 12.5 |
| Process oil content | % by mass | 21.5 | 28.8 | 30.7 | 31.8 | 27.6 | 33.1 | 37.4 |
| Silicone content | % by mass | 9.5 | 9.5 | 5.1 | 2.6 | 9.5 | 9.5 | 9.5 |
| EVA content | % by mass | 0.0 | 0.0 | 0.0 | 0.0 | 0.0 | 0.0 | 0.0 |
| Other component | % by mass | 41.2 | 45.2 | 48.2 | 49.9 | 50.5 | 44.9 | 40.6 |

| | | | | | | | | |
|---|---|---|---|---|---|---|---|---|
| Note) PP in R110MP is not included in PP content of Comparative Example 1. | | | | | | | | |

### [Table 5]

**Table 5.**

| Name of product | Unit | Reference Example 2 | Example 9 |
|---|---|---|---|
| LVP400 | phr | 73.21 | - |
| 200 V dusting powder to crushed product of LVP800 (100:2) | phr | - | 73.21 |
| J-466HP | phr | 12.66 | 12.66 |
| K9720 | phr | 3.85 | 3.85 |
| MA3H | phr | 10.28 | 10.28 |
| X-22-2101 | phr | 7.14 | 7.14 |
| KF-96 | phr | 7.43 | 7.43 |
| 1-1010 | phr | 0.15 | 0.15 |
| HP-10 | phr | 0.15 | 0.15 |
| LA-63P | phr | 0.30 | 0.30 |
| LA-36 | phr | 0.30 | 0.30 |
| F30940MM | phr | 0.35 | 0.35 |
| Total | phr | 115.82 | 115.82 |
| PP content | % by mass | 22.9 | 22.9 |
| Process oil content | % by mass | 0.0 | 0.0 |
| Silicone content | % by mass | 9.5 | 9.5 |
| EVA content | % by mass | 63.2 | 62.0 |
| Other component content | % by mass | 4.4 | 5.6 |

### [Preparation of Evaluation Test Piece]

Two-layered bodies (flat belts) consisting of a surface layer and a base material layer were extruded and molded using pellets (surface materials) of Examples 1 to 9, Comparative Examples 1 to 6, and Reference Examples 1 and 2, and the following base material pellets. Two extruders were connected to a flat belt die; the following base material pellet was put in one extruder; the pellets (surface materials) of Examples 1 to 9, Comparative Examples 1 to 6, and Reference Examples 1 and 2 were put in the other; and the pellets were extruded to manufacture flat belts consisting of two layers. The temperatures of the cylinders and dies of the two extruders were determined by selecting a good condition for good moldability in the range of 170 to 220°C. The thickness of the surface layer was 0.3 mm, and that of the base material layer was 2 mm.

### Base Material Pellet

- Milastomer C700BM (trade name): EPDM, Mitsui Chemicals, Inc., Shore A hardness (10 seconds later) 70, ether extraction amount (main component paraffin oil) 38% by mass
- Sarlink 4155N (trade name): EPDM, DSM Inc., Shore A hardness (10 seconds later) 55, amount of ether to be extracted (main component paraffin oil) 47% by mass
- Tefabloc CTN (trade name): styrene-based elastomer, CTS-Compound Technology Serrices, Shore A hardness (10 seconds later) 58, amount of ether to be extracted (main component paraffin oil) 33% by mass
- Tefabloc SVH (trade name): a mixture of a styrene-based elastomer and polyphenylene ether, CTS-Compound Technology Serrices, Shore A hardness (10 seconds later) 25, amount of ether to be extracted (main component paraffin oil) 33% by mass

### [Hardness Evaluation of Surface Layer]

A Shore A hardness was measured based on JIS K6253. Specifically, after a pressurization plate of a durometer A was brought into contact with a test piece, a measured value was read 10 seconds later, and was used as the Shore A hardness (10 seconds later). The results were shown in Tables 6 to 8.

### [Exudation Evaluation]

An evaluation test piece (two-layered molded product) was allowed to stand at room temperature; a time-lapse leakages amount (bleeding amount) of a silicone compound was visually observed; and the evaluation test piece was evaluated according to the following criteria. The results were shown in Tables 6 to 8.
A. The silicone compound does not leak out at all.
B. Although the leakages of the silicone compound is slightly observed, the silicone compound cannot be determined to leak out (between A and C).
C. The silicone compound slightly leaks out.
D. The silicone compound partially leaks out (in a droplet state or in a belt state).
E. The silicone compound extensively leaks out, and is attached to the whole with being sticky.

### [Evaluation of Slidability]

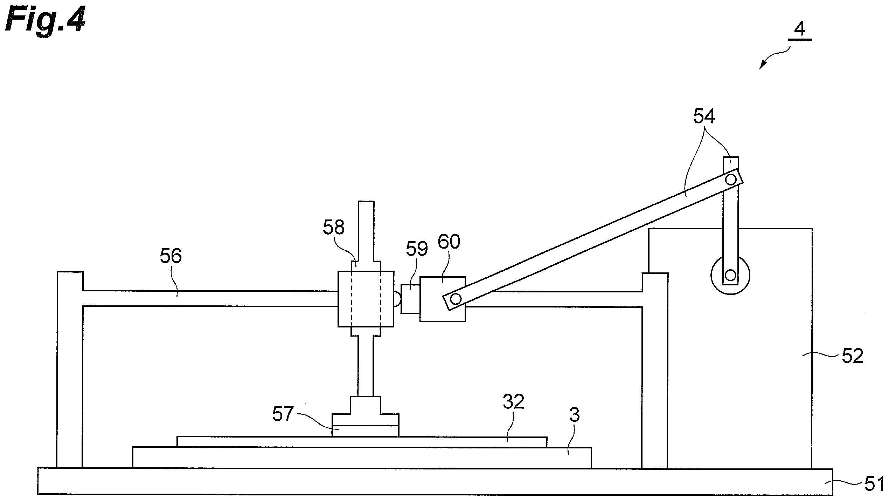

Figure 4 is a schematic sectional view of a sliding testing machine used for evaluation of slidability. A sliding testing machine 4 shown in Figure 4 includes a support plate 51 for fixing a jig 3 holding a two-layered molded product 32 in a longitudinal direction, a motor 52 provided on the support plate 51, an arm 54 converting the rotational motion of the motor 52 into linear motion along two parallel rods 56, a glass holding member 58 and a load cell fixing member 60 performing reciprocating linear motion via a bearing, a glass plate 57 sliding the two-layered molded product 32, and a load cell 59 detecting resistance caused by sliding.

The obtained two-layered molded product 32 (sample) was fixed by the jig 3 so that a two-layered portion on which a surface layer was coated was flexible, and was fixed to the sliding testing machine 4. The motor 52 was driven with a load of 7 N applied to the sample, to horizontally move the glass plate 57 (length: 50 mm) (average: 150 mm/second) to slide the two-layered molded product 32 (sample), thereby evaluating slidability.

As initial sliding, sliding test was performed under conditions shown below after sliding 100 times.

Number of slidings 1 to 3600th: The following (A) → (B) → (C) → (D) was defined as one set, and three sets were repeated.
(A) Sliding was performed 500 times (250 cycles) with muddy water applied.
(B) Sliding was performed 500 times with muddy water reapplied.
(C) After muddy water on the sample was wiped with a gauze, sliding was performed 100 times with water applied.
(D) After water on the sample was wiped with a gauze, sliding was performed 100 times.

Number of slidings 3601 to 5000th: The following (a) → (b) → (c) → (d) → (e) → (f) → (g) was defined as one set, and two sets were repeated.
(a) Sliding was performed 100 times with muddy water applied.
(b) After muddy water on the sample was wiped with a gauze, sliding was performed 100 times with water applied.
(c) After water on the sample was wiped with a gauze, sliding was performed 100 times.
(d) Sliding was performed 100 times with water applied.
(e) After water on the sample was wiped with a gauze, sliding was performed 100 times.
(f) Sliding was performed 100 times with muddy water applied.
(g) After muddy water on the sample was wiped with a gauze, sliding was performed 100 times.

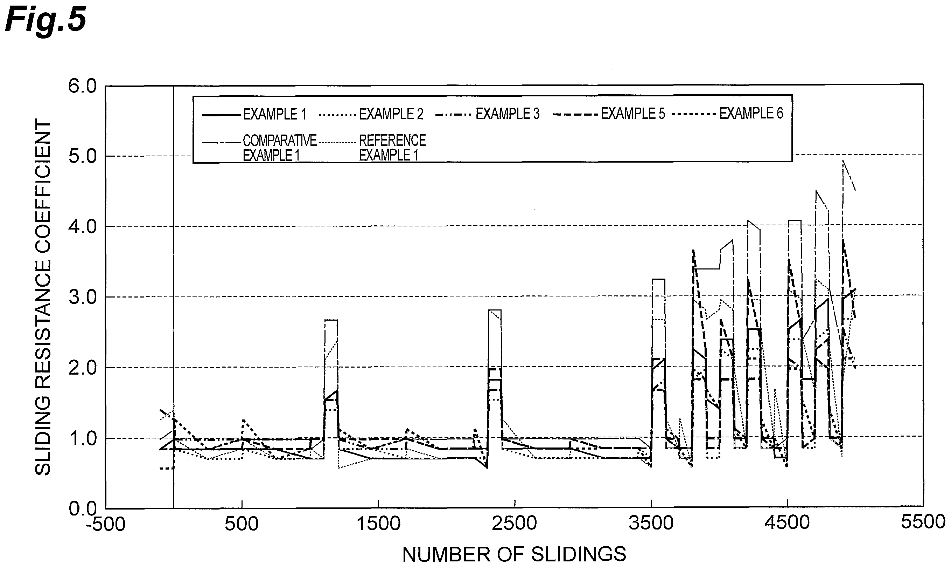

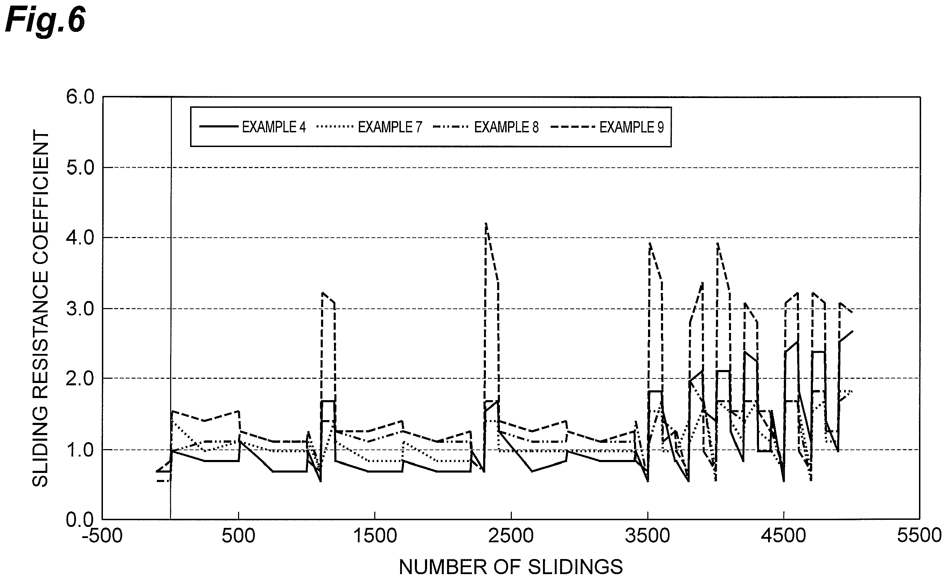

In this case, a horizontal load was measured by the load cell 59, and the existence and number of occurrences of noise were measured by an ear. A sliding resistance coefficient was obtained from the load measured by the load cell 59. Figures 5 and 6 are views plotting the relation between the sliding resistance coefficient and the number of slidings. The sliding resistance coefficient which became the maximum through the whole sliding test was described in Tables 6 to 8 as a maximum sliding resistance coefficient. The number of occurrences of the noise was described in Tables 6 to 8.

### [Table 6]

**Table 6.**

| Evaluation item | | Example 1 | Example 2 | Example 3 | Example 4 | Example 5 | Example 6 | Example 7 | Example 8 |
|---|---|---|---|---|---|---|---|---|---|
| Exudation evaluation result | | | | | | | | | |
| Base material layer | Elapsed time after molding | | | | | | | | |
| Milastomer C700BM | A day later | A | A | - | A | - | - | - | - |
| | A week later | A | A | - | A | - | - | - | - |
| | A month later | A | A | - | A | - | - | - | - |
| | Two months later | A | A | - | A | - | - | - | - |
| Sarlink 4155N | A day later | A | A | - | A | - | A | A | A |
| | A week later | A | A | - | A | - | A | A | A |
| | A month later | A | A | - | A | - | A | - | - |
| | Two months later | A | A | - | - | - | - | - | - |
| Tefabloc CTN | A day later | A | A | - | A | - | A | - | - |
| | A week later | A | A | - | A | - | A | - | - |
| | A month later | A | A | - | A | - | A | - | - |
| | Two months later | A | A | - | - | - | - | - | - |
| Tefabloc SVH | A day later | A | A | A | A | A | A | - | - |
| | A week later | A | A | A | A | A | A | - | - |
| | A month later | A | A | A | A | A | A | - | - |
| | Two months later | A | A | A | - | A | A | - | - |
| Evaluation result of hardness of surface layer | | | | | | | | | |
| Shore A hardness | (10 seconds later) | 83 | 84 | 79 | 75 | 82 | 86 | - | - |
| Evaluation result of slidability | | | | | | | | | |
| Maximum sliding resistance coefficient | | 3.09 | 2.67 | 2.52 | 2.67 | 3.79 | 2.10 | 1.82 | 2.10 |
| Number of occurrences of noise | | 0/5000 | 2/5000 | 6/5000 | 0/5000 | 6/5000 | 0/5000 | 0/5000 | 0/5000 |
| Base material of sample used for sliding test | | Tefabloc CTN | Tefabloc CTN | Tefabloc CTN | Milastomer C700BM | Tefabloc CTN | Milastomer C700BM | Sarlink 4155N | Sarlink 4155N |

### [Table 7]

**Table 7.**

| Evaluation item | | Comparative Example 1 | Comparative Example 2 | Comparative Example 3 | Comparative Example 4 | Comparative Example 5 | Comparative Example 6 | Reference Example 1 |
|---|---|---|---|---|---|---|---|---|
| Exudation evaluation result | | | | | | | | |
| Base material layer | Elapsed time after molding | | | | | | | |
| Milastomer C700BM | A day later | - | - | - | - | - | - | A |
| | A week later | - | - | - | - | - | - | A |
| | A month later | - | - | - | - | - | - | B |
| | Two months later | - | - | - | - | - | - | A |
| Sarlink 4155N | A day later | B | B | A | A | - | - | - |
| | A week later | E | D | D | c | - | - | - |
| | A month later | Stopped | Stopped | E | E | - | - | - |
| | Two months later | - | - | Stopped | Stopped | - | - | - |
| Tefabloc CTN | A day later | C | B | A | A | - | - | - |
| | A week later | E | E | D | D | - | - | - |
| | A month later | Stopped | Stopped | Stopped | Stopped | - | - | - |
| | Two months later | - | - | - | - | - | - | - |
| Tefabloc SVH | A day later | - | - | - | - | A | A | A |
| | A week later | - | - | - | - | C | D | A |
| | A month later | - | - | - | - | E | E | B |
| | Two months later | - | - | - | - | Stopped | Stopped | A |
| Evaluation result of hardness of surface layer | | | | | | | | |
| Shore A hardness (10 seconds later) | | 82 | 63 | 62 | 54 | 51 | 48 | 43 |
| Evaluation result of slidability | | | | | | | | |
| Maximum sliding resistance coefficient | | 4.91 | - | - | - | - | - | 3.23 |
| Number of occurrences of noise | | 0/5000 | - | - | - | - | - | 8/5000 |
| Base material of sample used for sliding test | | Tefabloc CTN | - | - | - | - | - | Milastomer C700BM |

### [Table 8]

**Table 8.**

| Evaluation item | | Reference Example 2 | Example 9 |
|---|---|---|---|
| Exudation evaluation result | | | |
| Base material layer | Elapsed time after molding | | |
| Milastomer C700BM | A day later | Note 1 | A |
| | A week later | Note 1 | A |
| Sarlink 4155N | A day later | Note 2 | A |
| | A week later | Note 2 | A |
| Evaluation result of hardness of surface layer | | | |
| Shore A hardness (10 seconds later) | | - | - |
| Evaluation result of slidability | | | |
| Maximum sliding resistance coefficient | | - | 4.21 |
| Number of occurrences of noise | | - | 0/5000 |
| Base material of sample used for sliding test | | - | Milastomer C700BM |

| | | | |
|---|---|---|---|
| Note 1: Discharge was not stabilized and molding could not be performed. Note 2: A silicone compound existed in a depression caused by poor molding soon after molding (the level was C to D). | | | |

In the sliding test, in the two-layered molded product of Example 2, noises occurred twice in total in (d) of the second set, i.e., near the 4601st sliding; in Example 3, occurrence of noise started in (c), (d), (e), and (f) of the second set, i.e., near the 4510th sliding (6 times in total); in Example 5, occurrence of noise started in (d), (e), and (f) of the second set, i.e., near the 4910th sliding (6 times in total). In Reference Example 1, noises occurred 8 times in total in initial sliding.

It was confirmed that the two-layered molded product having the surface layer composed of the surface material containing the cross-linked ethylene vinyl acetate copolymer can sufficiently suppress bleeding of the silicone compound from the surface layer from the results of Examples 1 to 8.

It was confirmed that the two-layered molded product having the surface layer composed of the surface material containing the non-cross-linked ethylene vinyl acetate copolymer also can suppress the bleeding of the silicone compound from the surface layer from the results of Example 9 and Reference Example 2. However, because, in Reference Example 2 using the non-cross-linked ethylene vinyl acetate copolymer in which the content of an vinyl acetate unit was 40% by mass, a phenomenon in which the feeding performance of a single screw extruder was poor, and the amount to be discharged was not stabilized occurred, the stabilized shape was not obtained, and there was a problem in moldability. For this reason, in Reference Example 2, an elliptical or linear depression was apt to occur on the surface, and the silicone compound existed (was scattered) in the depression part soon after molding. On the other hand, Example 9 using the non-cross-linked ethylene vinyl acetate copolymer in which the content of the vinyl acetate unit was 80% by mass exhibited a sufficient level of appearance though being inferior to those of the two-layered molded products of Examples 1 to 8. The conspicuous liquid material did not exist on the surface immediately after molding and after a lapse of one week, and the bleeding of the silicone compound was sufficiently suppressed.

### [Analysis of Micro-Structure]

Micro-structures in the two-layered molded products of Examples 1 and 6 and Comparative Example 1 were observed by producing an X-ray image of a Si element, C element, or O element using an electron probe microanalyzer (EPMA) JXA-8100 (manufactured by JEOL Ltd.). The X-ray image was observed on a surface in a direction (flow direction) parallel to the co-extrusion molding direction of the two-layered molded product and a surface in a direction (perpendicular direction) perpendicular to the co-extrusion molding direction.

First, the analysis surface of the two-layered molded product was cut by a razor, and a sample was cut out so that the width of the analysis surface was set to about 5 mm. A conductive tape was stuck on an exclusive sample stand (cube block of 10 mm made of brass), and the sample was adhered onto the conductive tape. Carbon dotite was applied to the circumference and side surface of the analysis surface. Analysis was performed with a stage scan, and an accelerating voltage was set to 15 kV; an irradiation current, 10 nA; a pixel size, 1 µm × 1 µm; the number of pixels, 300 × 300; a measuring time per pixel, 40 ms; a measuring range, 300 µm × 300 µm; and measuring elements, Si, C, and O.

In the case of the Si element, the analysis surface was divided into a region having a concentration level of "more than 50," "50 to 43," "43 to 37," "37 to 31," "31 to 25," "25 to 18," "18 to 12," "12 to 6," "6 to 0," or "less than 0," and each region was separated by color and colored. The region in which the concentrations of the Si element and O element are high is a region in which the silicone compound is distributed in a large amount.

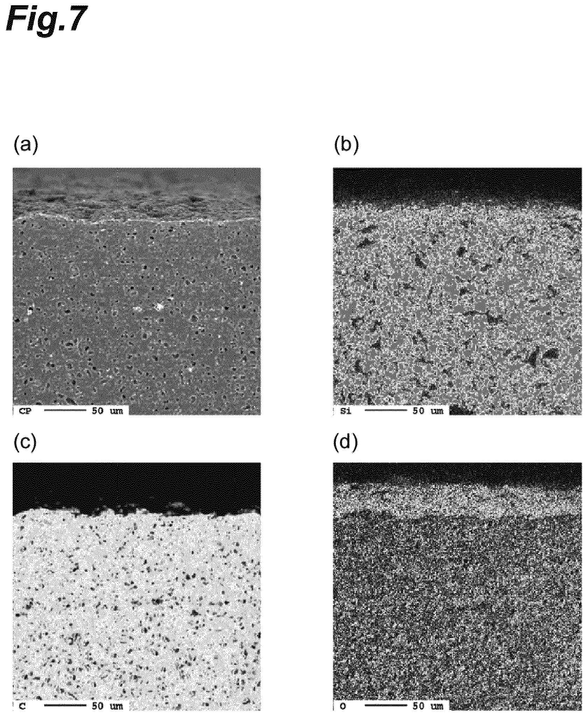

Figures 7 to 12 show X-ray images of the section of the two-layered molded product in the flow direction or the perpendicular direction. The correspondence relations between the drawings and Examples will be described later. In Figures 7 to 12, (a), (b), (c), and (d) are X-ray images in the same region; (a) is an image to which mapping is not applied by an element concentration; (b), (c), and (d) are respectively images to which mapping is applied by a Si element concentration, a C element concentration, and an O element concentration. The drawings are drawn so that coloring is lighter as the element concentrations are higher.
Figure 7: Example 1, a section in a flow direction

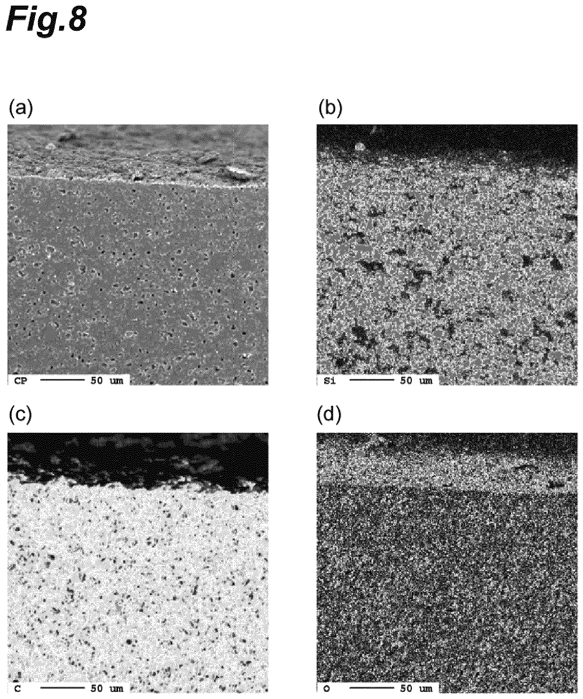

Figure 8: Example 1, a section in a perpendicular direction

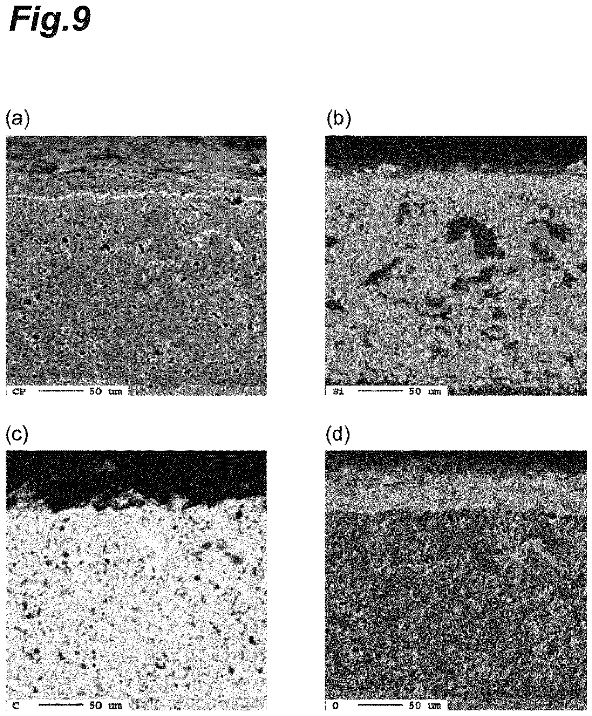

Figure 9: Example 6, a section in a flow direction

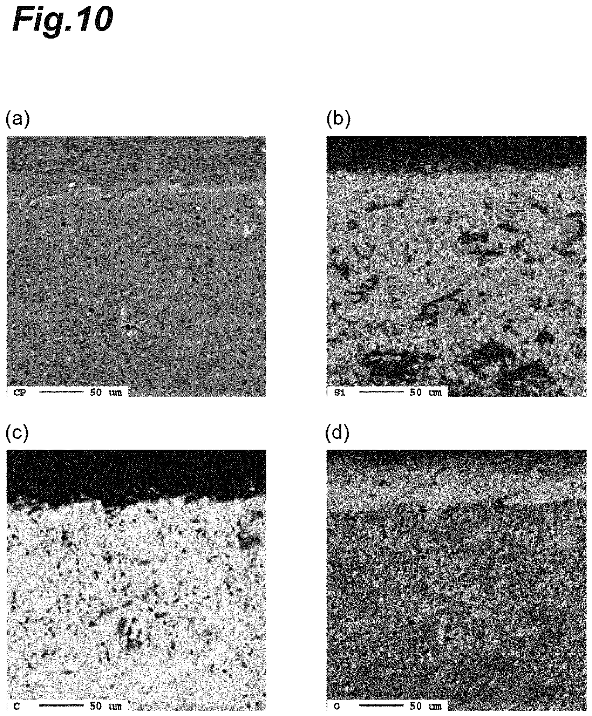

Figure 10: Example 6, a section in a perpendicular direction

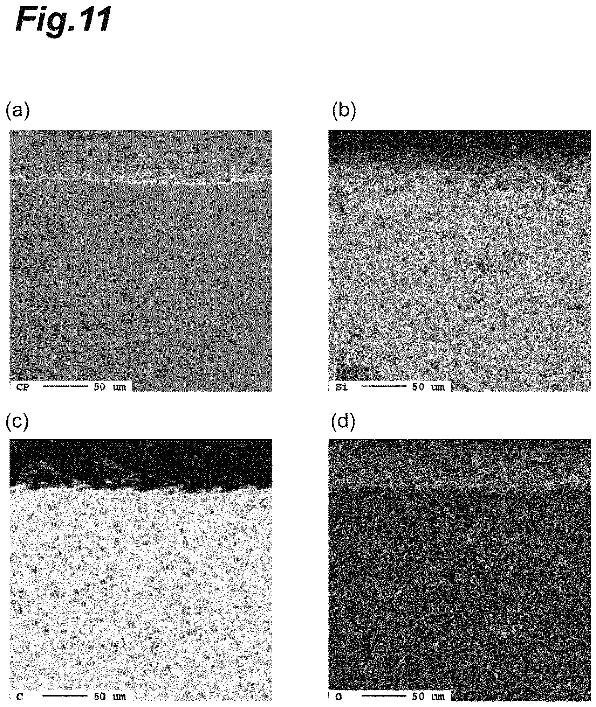

Figure 11: Comparative Example 1, a section in a flow direction

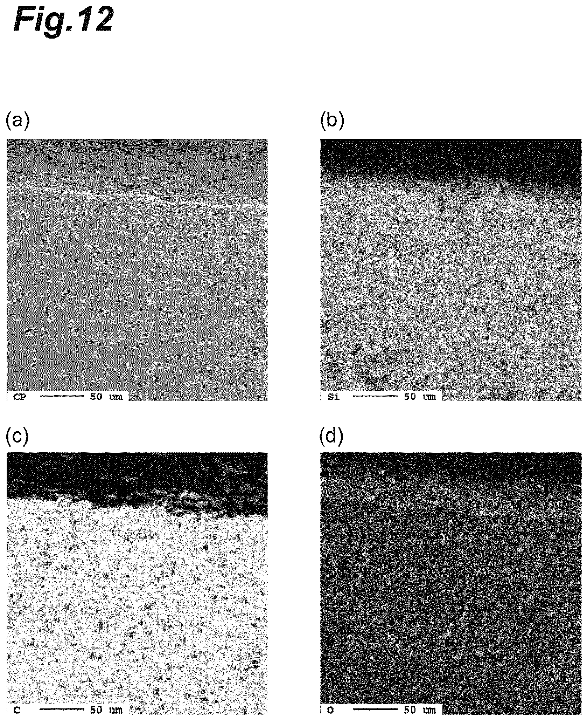

Figure 12: Comparative Example 1, a section in a perpendicular direction

From comparison of the mapping image due to the Si element concentration with the mapping image due to the C element concentration, it was observed that the Si element tends to be distributed in a large amount around the region in which the C element concentration is high in all Examples. As in the mapping image due to the O element concentration, it was observed that the O element tends to be distributed in a large amount around the region in which the C element concentration is high. This is considered to show that a phase containing the silicone compound as a main component is formed between phases containing the cross-linked ethylene vinyl acetate copolymer having a high C element concentration as a main component.

The concentrations of the silicone compounds of Example 1, Example 6, and Comparative Example 1 are respectively equal to 9.5, 9.1, and 9.5% by mass. If attention is directed to the mapping image due to the Si element concentration, the following feature was observed in Example 1 and Example 6 compared to Comparative Example 1 (Figures 7 to 12): "coloring in a portion (portion in which coloring is lighter) in which the concentration of the silicone compound is higher is lighter, and coloring in a portion (portion in which coloring is darker) in which the concentration of the silicone compound is lower is darker."

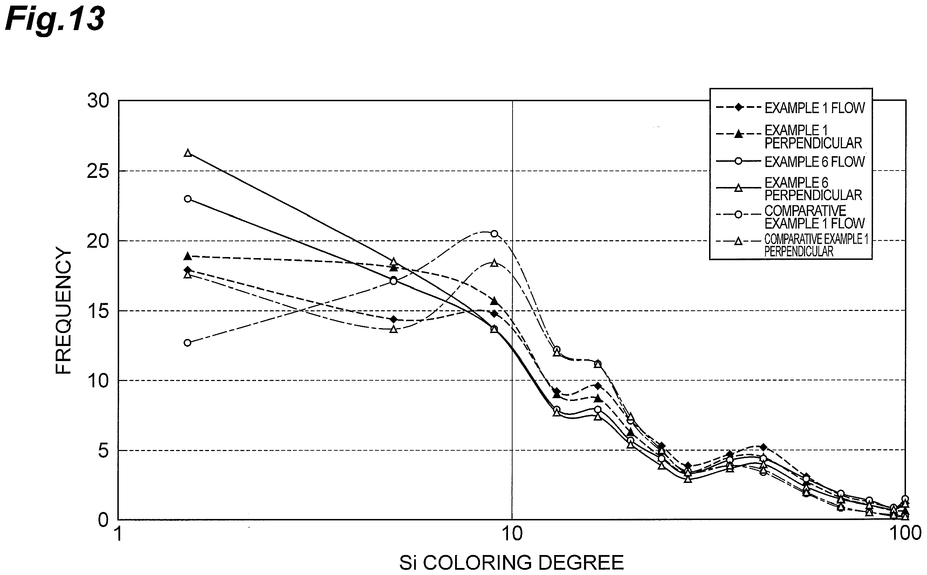

Figure 13 is a graph plotting a frequency (Area%) to a Si coloring degree (darkness). The frequency of Comparative Example 1 at the Si coloring degree of 9 to 20 is higher than those of Examples 1 and 6 (Figure 13), which supports the observation result of the X-ray image.

It is considered that a property to repel the silicone compound to the periphery in the domain (Examples 1 and 6) composed of the cross-linked ethylene vinyl acetate copolymer is strong from the observation results of the X-ray image. For this reason, because the silicone compound hardly exists in the flexible domain even if the mineral oil of the base material layer moves into the flexible domain, it is considered that the silicone compound does not excessively move to the surface of the surface layer, and the bleeding is suppressed.

### Reference Signs List

3: jig, 4: sliding testing machine, 10: silicone compound, 20: domain, 30: matrix, 32: two-layered molded product, 51: support plate, 52: motor, 54: arm, 56: rod, 57: glass plate, 58: glass holding member, 59: load cell, 60: load cell fixing member, 100: surface material, 110: base material layer, 120: surface layer, 200: multilayer body.

## Claims

1. A surface material comprising, in a matrix composed of an olefin-based polymer, a domain composed of a cross-linked ethylene vinyl acetate copolymer or a non-cross-linked ethylene vinyl acetate copolymer, and a silicone compound, wherein:
the cross-linked ethylene vinyl acetate copolymer is a cross-linked copolymer of 30 to 90% by mass of vinyl acetate and 10 to 70% by mass of ethylene,
the non-cross-linked ethylene vinyl acetate copolymer is a copolymer of 60 to 90% by mass of vinyl acetate and 10 to 40% by mass of ethylene, the content of the domain is 30 to 90% by mass based on the total amount of the surface material, and
the content of the silicone compound is 1 to 25 parts by mass based on the total 100 parts by mass of the content of the domain and the content of olefin-based polymer.

2. The surface material according to claim 1, wherein the domain is composed of the cross-linked ethylene vinyl acetate copolymer.

3. The surface material according to claim 1 or claim 2, wherein the olefin-based polymer is a propylene-based polymer.

4. The surface material according to any one of claims 1 to 3, wherein the surface material has a Shore A hardness of 90 or less.

5. A multilayer body comprising: at least
a base material layer comprising an elastomer and mineral oil; and
a surface layer being adjacent to the base material layer and positioned at a outermost layer,
wherein the surface layer is composed of the surface material according to any one of claims 1 to 5.

6. The multilayer body according to claim 5, wherein a content of the mineral oil is 20% by mass or more based on the total amount of the base material layer.

7. The multilayer body according to claim 5 or claim 6, wherein the elastomer is an olefin-based thermoplastic elastomer, a styrene-based thermoplastic elastomer, or an ethylene-α-olefin-non-conjugated diene copolymer vulcanized rubber.

8. The multilayer body according to any one of claims 5 to 7, wherein a Shore A hardness of the base material layer is 85 or less.

9. A sliding member comprising the multilayer body according to any one of claims 5 to 8.

10. An interior member comprising the multilayer body according to any one of claims 5 to 8.

11. A sealing member comprising the multilayer body according to any one of claims 5 to 8.

## Patentansprüche

1. Oberflächenmaterial, das in einer Matrix, die sich aus einem olefinbasierten Polymer zusammensetzt, eine Domäne, die sich aus einem vernetzten Ethylen-Vinylacetat-Copolymer oder einem nicht vernetzten Ethylen-Vinylacetat-Copolymer, und einer Silikonverbindung zusammensetzt, wobei:
das vernetzte Ethylen-Vinylacetat-Copolymer ein vernetztes Copolymer von 30 bis 90 Massen-% Vinylacetat und 10 bis 70 Massen-% Ethylen ist,
das nicht vernetzte Ethylen-Vinylacetat-Copolymer ein vernetztes Copolymer von 60 bis 90 Massen-% Vinylacetat und 10 bis 40 Massen-% Ethylen ist,
der Gehalt der Domäne 30 bis 90 Massen-% beträgt, bezogen auf die Gesamtmenge des Oberflächenmaterials, und
der Gehalt der Silikonverbindung 1 bis 25 Massenteile beträgt, bezogen auf die gesamten 100 Massenteile des Gehalts der Domäne und des Gehalts an olefinbasiertem Polymer.

2. Oberflächenmaterial nach Anspruch 1, wobei die Domäne sich aus dem vernetzten Ethylen-Vinylacetat-Copolymer zusammensetzt.

3. Oberflächenmaterial nach Anspruch 1 oder 2, wobei das olefinbasierte Polymer ein propylenbasiertes Polymer ist.

4. Oberflächenmaterial nach einem der Ansprüche 1 bis 3, wobei das Oberflächenmaterial eine Shore-A-Härte von 90 oder weniger aufweist.

5. Mehrschichtiger Körper, umfassend: mindestens
eine Basismaterialschicht, die ein Elastomer und Mineralöl umfasst; und
eine Oberflächenschicht, die an die Basismaterialschicht angrenzt und an einer äußersten Schicht positioniert ist,
wobei die Oberflächenschicht sich aus dem Oberflächenmaterial nach einem der Ansprüche 1 bis 5 zusammensetzt.

6. Mehrschichtiger Körper nach Anspruch 5, wobei ein Gehalt des Mineralöls 20 Massen-% oder mehr beträgt, bezogen auf die Gesamtmenge der Basismaterialschicht.

7. Mehrschichtiger Körper nach Anspruch 5 oder 6, wobei das Elastomer ein olefinbasiertes thermoplastisches Elastomer, ein styrolbasiertes thermoplastisches Elastomer oder ein Ethylen-α-Olefin-nicht-konjugiertes-Dien-Copolymer-Vulkanisat ist.

8. Mehrschichtiger Körper nach einem der Ansprüche 5 bis 7, wobei eine Shore-A-Härte der Basismaterialschicht 85 oder weniger beträgt.

9. Schiebeelement, das den mehrschichtigen Körper nach einem der Ansprüche 5 bis 8 umfasst.

10. Innenausstattungselement, das den mehrschichtigen Körper nach einem der Ansprüche 5 bis 8 umfasst.

11. Dichtungselement, das den mehrschichtigen Körper nach einem der Ansprüche 5 bis 8 umfasst.

## Revendications

1. Matériau de surface comprenant, dans une matrice composée d'un polymère à base d'oléfines, un domaine composé d'un copolymère éthylène-acétate de vinyle réticulé ou d'un copolymère éthylène-acétate de vinyle non réticulé, ainsi qu'un composé silicone, dans lequel :
le copolymère éthylène-acétate de vinyle réticulé est un copolymère réticulé contenant de 30 à 90 % en masse d'acétate de vinyle et de 10 à 70 % en masse d'éthylène,
le copolymère éthylène-acétate de vinyle non réticulé est un copolymère contenant de 60 à 90 % en masse d'acétate de vinyle et de 10 à 40 % en masse d'éthylène, la teneur du domaine est égale à 30 à 90 % en masse par rapport à la quantité totale de matériau de surface, et
la teneur du composé silicone est égale à 1 à 25 parties en masse, par rapport aux 100 parties totales en masse de la teneur du domaine et de la teneur du polymère à base d'oléfine.

2. Matériau de surface selon la revendication 1, dans laquelle le domaine est composé du copolymère éthylène-acétate de vinyle réticulé.

3. Matériau de surface selon la revendication 1 ou la revendication 2, dans lequel le polymère à base d'oléfine est un polymère à base de propylène.

4. Matériau de surface selon l'une quelconque des revendications 1 à 3, dans lequel le matériau de surface a une dureté Shore A égale à 90 ou moins.

5. Corps multicouche comprenant : au moins
une couche de matériau de base comprenant un élastomère et de l'huile minérale ; et
une couche de surface qui est adjacente à la couche de matériau de base et placée au niveau d'une couche située le plus à l'extérieur,
dans laquelle la couche de surface est composée de la matériau de surface selon l'une quelconque des revendications 1 à 5.

6. Corps multicouche selon la revendication 5, dans lequel une teneur en huile minérale est de 20 % en masse, ou plus, par rapport à la quantité totale de la couche de matériau de base.

7. Corps multicouche selon la revendication 5 ou la revendication 6, dans lequel l'élastomère est un élastomère thermoplastique à base d'oléfine, un élastomère thermoplastique à base de styrène, ou un caoutchouc vulcanisé de copolymère de diène éthylène-α-oléfine non-conjugué.

8. Corps multicouche selon l'une quelconque des revendications 5 à 7, dans lequel une dureté Shore A de la couche de matériau de base est égale à 85 ou moins.

9. Elément coulissant comprenant le corps multicouche selon l'une quelconque des revendications 5 à 8.

10. Elément interne comprenant le corps multicouche selon l'une quelconque des revendications 5 à 8.

11. Elément d'étanchéité comprenant le corps multicouche selon l'une quelconque des revendications 5 à 8.
